# EUROPEAN PATENT APPLICATION

(11) **EP 4 429 315 A1**
(43) Date of publication of application: **11.09.2024**
(21) Application number: 22900151.6
(22) Date of filing: 25.10.2022
(51) Int. Cl.: H04W 24/04, H04W 16/28

(54) **METHOD FOR TRANSMITTING INFORMATION, AND COMMUNICATION APPARATUS**

(30) Priority: 30.11.2021 CN 202111444980; 31.12.2021 CN 202111679601
(71) Applicant: Huawei Technologies Co., Ltd., Shenzhen, Guangdong 518129 (CN)
(72) Inventor: BI, Shuangkaisheng, Shenzhen, Guangdong 518129 (CN); HE, Hongli, Shenzhen, Guangdong 518129 (CN); LI, Xueru, Shenzhen, Guangdong 518129 (CN)
(74) Representative: Körber, Martin Hans
(86) International application number: PCT/CN2022/127497
(87) International publication number: WO 2023/098346

(57) **Abstract**

This application provides an information transmission method and a communication apparatus, and relates to the communication field. A terminal device may indicate a first beam and a first moment by using first indication information, the terminal device measures at least one first reference signal based on second indication information, to obtain a second beam, and indicates the second beam by using third indication information, and the terminal device may receive first configuration information at a second moment. The second moment at which the terminal device receives the first configuration information is obtained based on the first moment. The first moment may be a future moment, that is, the terminal device may predict the first beam in advance. The second moment is not earlier than the first moment, and the second moment may also be a future moment. When the future second moment arrives, the terminal device may receive the first configuration information for configuring the second beam, so that a latency caused by determining the first beam after a beam failure can be avoided, to improve transmission reliability.

## Description

This application claims priority to Chinese Patent Application No. 202111444980.0, filed with the China National Intellectual Property Administration on November 30, 2021 and entitled "COMMUNICATION METHOD, TERMINAL, AND NETWORK DEVICE", and priority to Chinese Patent Application No. 202111679601.6, filed with the China National Intellectual Property Administration on December 31, 2021 and entitled "INFORMATION TRANSMISSION METHOD AND COMMUNICATION APPARATUS", which are incorporated herein by reference in their entireties.

### TECHNICAL FIELD

This application relates to the communication field, and more specifically, to an information transmission method and a communication apparatus in the communication field.

### BACKGROUND

In new radio (new radio, NR), a network device and a terminal device need to perform beam pairing, and communicate with each other by using a paired beam. However, if the paired beam fails or link quality deteriorates, beam re-pairing needs to be performed. In a beam re-pairing process, the network device needs to periodically send a reference signal, and the terminal device performs a coarse measurement. Then, the network device sends the reference signal, and the terminal device performs a fine measurement, to complete beam pairing. In this way, the beam re-pairing process between the terminal device and the network device takes a long time. In the re-pairing process between the terminal device and the network device, data cannot be transmitted between the terminal device and the network device or transmitted data may be lost. Therefore, data transmission with a high latency requirement cannot be met, and transmission reliability is poor.

### SUMMARY

Embodiments of this application provide an information transmission method and a communication apparatus, to improve transmission reliability.

According to a first aspect, an information transmission method is provided. The method is applicable to a terminal device, and includes:
sending first indication information, where the first indication information indicates a first beam and a first moment;
receiving second indication information, where the second indication information indicates the terminal device to measure at least one first reference signal, and there is a quasi co-location QCL relationship between the at least one first reference signal and the first beam;
sending third indication information, where the third indication information indicates a second beam, and the second beam is obtained by the terminal device by measuring the at least one first reference signal; and
receiving first configuration information at a second moment, where the first configuration information indicates that a transmission beam of a control channel or a data channel is the second beam, the second moment is not earlier than the first moment, and the second moment is obtained based on the first moment.

In the foregoing solution, the terminal device may indicate the first beam and the first moment by using the first indication information, the terminal device measures the at least one first reference signal based on the second indication information, to obtain the second beam, and indicates the second beam by using the third indication information, and the terminal device may receive the first configuration information at the second moment. The second moment at which the terminal device receives the first configuration information is obtained based on the first moment. The first moment may be a future moment, that is, the terminal device may predict the first beam in advance. The second moment is not earlier than the first moment, and the second moment may also be a future moment. When the future second moment arrives, the terminal device may receive the first configuration information for configuring the second beam, so that a latency caused by determining the first beam after a beam failure can be avoided, to improve transmission reliability.

Optionally, the first moment is a future moment.

Optionally, the first moment may be a future moment at which the terminal device enters a blocking environment.

Optionally, the first moment may be a future moment at which the terminal device leaves a blocking environment.

Optionally, the terminal device may determine the first moment based on a current position, a movement speed of the terminal device, and a current moment. That is, as the terminal device moves, the first moment determined by the terminal device may change. Therefore, the terminal device may indicate the changed first moment.

Optionally, the first beam may be an SSB beam.

Optionally, the at least one first reference signal may be a CSI-RS.

Optionally, the second beam may be a CSI-RS beam.

Optionally, a direction of the first beam may include a direction of a beam for sending the at least one first reference signal.

Alternatively, the first indication information may indicate the first beam and indicate that the first beam is a future beam.

In some possible implementations, the second indication information indicates the terminal device to measure the at least one first reference signal at a third moment; and
the third moment is not later than the first moment.

In the foregoing solution, the terminal device needs to measure the at least one first reference signal at the third moment before the first moment. That is, the terminal device needs to measure the at least one first reference signal in advance and determine the second beam. In this way, after the first moment, a first network device may directly send the control channel or the data channel by using the second beam, to reduce a latency in determining the second beam by the terminal device after the first moment.

In some possible implementations, the second indication information indicates the terminal device to measure the at least one first reference signal at a third moment; and
the third moment is not earlier than the first moment.

In the foregoing solution, the terminal device may measure the at least one first reference signal at the third moment after the first moment. In this way, the terminal device may determine the first beam before the first moment, and determine the second beam after the first moment. Optionally, the first beam is an SSB beam, and the second beam is a CSI-RS beam. In this way, the terminal device may determine the SSB beam before the first moment, and determine the CSI-RS beam corresponding to the SSB beam after the first moment.

In some possible implementations, after the first moment and before the second moment, the transmission beam of the control channel or the data channel is the first beam.

In the foregoing solution, the first network device sends the first configuration information at the second moment. The first moment may be a moment at which a blockage occurs or a moment at which a blockage disappears. Because the second moment is later than the first moment, transmission between the terminal device and the first network device may be interrupted in a time period between the first moment and the second moment. Therefore, after the first moment and before the second moment, the transmission beam of the control channel or the data channel is the first beam, that is, the first beam may be used as a temporary transmission beam, to avoid transmission interruption.

In some possible implementations, a difference between the second moment and the first moment is less than a preset value.

In the foregoing solution, if a time between the second moment and the first moment is excessively long, the first network device sends the first configuration information after a long time period existing after the blockage occurs. Consequently, data cannot be transmitted in a long time period between the second moment and the first moment.

In some possible implementations, the method further includes:
sending fourth indication information, where the fourth indication information indicates a fourth moment;
receiving fifth indication information, where the fifth indication information indicates the terminal device to measure at least one second reference signal, there is a QCL relationship or an indirect QCL relationship between the at least one second reference signal and a third beam, and the third beam is a transmission beam that is of the control channel or the data channel and that is used before the first indication information is sent;
sending sixth indication information, where the sixth indication information indicates a fourth beam, and the fourth beam is obtained by the terminal device by measuring the at least one second reference signal; and
receiving second configuration information at the fourth moment, where the second configuration information indicates that the transmission beam of the control channel or the data channel is the fourth beam.

In the foregoing solution, the terminal device may determine the fourth beam in advance before the fourth moment. In this way, a latency can be reduced, and before the terminal device leaves the blocking environment, the fourth beam to be used after the terminal device leaves the blocking environment may be measured, to avoid a problem that a long latency is caused because the first network device and the terminal device need to perform beam pairing for a long time after the terminal device leaves the blocking environment, so as to improve transmission performance.

Optionally, the third beam may be an SSB beam or a CSI-RS beam.

Optionally, the fourth beam may be a CSI-RS beam.

Optionally, the third beam may be an SSB beam, the at least one second reference signal may be at least one CSI-RS, and there is a QCL relationship between the third beam and the at least one second reference signal.

Optionally, the third beam may be a CSI-RS beam, the at least one second reference signal may be at least one CSI-RS, and there is an indirect QCL relationship between the third beam and the at least one second reference signal.

In some possible implementations, the method further includes: sending fourth indication information, where the fourth indication information indicates a fourth moment, after the fourth moment, the transmission beam of the control channel or the data channel is a third beam, and the third beam is a transmission beam that is of the control channel or the data channel and that is used before the first indication information is sent.

Optionally, the fourth moment is a moment of leaving the blocking environment. The terminal device may determine, based on a second position at which another terminal device leaves the blocking environment, that the terminal device may leave the blocking environment at the second position. The terminal device may predict, based on the current moment, the second position, and the movement speed of the terminal device, the fourth moment at which the terminal device moves to the second position.

According to a second aspect, an information transmission method is provided. The method is applicable to a first network device, and includes:
receiving first indication information, where the first indication information indicates a first beam and a first moment;
sending second indication information, where the second indication information indicates a terminal device to measure at least one first reference signal, and there is a quasi co-location QCL relationship between the at least one first reference signal and the first beam;
receiving third indication information, where the third indication information indicates a second beam, and the second beam is obtained by the terminal device by measuring the at least one first reference signal; and
sending first configuration information at a second moment, where the first configuration information indicates that a transmission beam of a control channel or a data channel is the second beam, the second moment is not earlier than the first moment, and the second moment is obtained based on the first moment.

In the foregoing solution, the first network device may receive the first indication information indicating the first beam and the first moment, and send the second indication information for measuring the at least one first reference signal, the terminal device measures the at least one first reference signal based on the second indication information, to obtain the second beam, the first network device may receive the third indication information indicating the second beam, and the first network device may send the first configuration information at the second moment. The second moment at which the first network device sends the first configuration information is obtained based on the first moment. The first moment may be a future moment, that is, the terminal device may predict the first beam in advance. The second moment is not earlier than the first moment, and the second moment may also be a future moment. When the future second moment arrives, the first network device may send the first configuration information for configuring the second beam, so that a latency caused by determining the first beam after a beam failure can be avoided, to improve transmission reliability.

In some possible implementations, the second indication information indicates the terminal device to measure the at least one first reference signal at a third moment; and
the third moment is earlier than the first moment.

In some possible implementations, the second indication information indicates the terminal device to measure the at least one first reference signal at a third moment; and
the third moment is later than the first moment.

In some possible implementations, after the first moment and before the second moment, the transmission beam of the control channel or the data channel is the first beam.

In some possible implementations, a difference between the second moment and the first moment is less than a preset value.

In some possible implementations, the method further includes:
receiving fourth indication information, where the fourth indication information indicates a fourth moment;
sending fifth indication information, where the fifth indication information indicates the terminal device to measure at least one second reference signal, there is a quasi co-location QCL relationship or an indirect QCL relationship between the at least one second reference signal and a third beam, and the third beam is a transmission beam that is of the control channel or the data channel and that is used before the first indication information is received;
receiving sixth indication information, where the sixth indication information indicates a fourth beam, and the fourth beam is obtained by the terminal device by measuring the at least one second reference signal; and
sending second configuration information at the fourth moment, where the second configuration information indicates that the transmission beam of the control channel or the data channel is the fourth beam.

In some possible implementations, the sending further includes:
sending fourth indication information, where the fourth indication information indicates a fourth moment, after the fourth moment, the transmission beam of the control channel or the data channel is a third beam, and the third beam is a transmission beam that is of the control channel or the data channel and that is used before the first indication information is received.

It should be noted that for beneficial effects of the second aspect, refer to the descriptions of the first aspect. To avoid repetition, details are not described.

According to a third aspect, an information transmission method is provided. The method is applicable to a second network device, and includes:
receiving first indication information from a terminal device, where the first indication information indicates a first beam and a first moment;
sending the first indication information to a first network device;
receiving second indication information from the first network device, where the second indication information indicates the terminal device to measure at least one first reference signal, and there is a quasi co-location QCL relationship between the at least one first reference signal and the first beam;
receiving third indication information from the terminal device, where the third indication information is used for a second beam, and the second beam is obtained by the terminal device by measuring the at least one first reference signal; and
sending the third indication information to the first network device, where
the first moment is used to obtain a second moment at which the first network device sends first configuration information, the first configuration information indicates that a transmission beam of a control channel or a data channel is the second beam, and the second moment is not earlier than the first moment.

In the foregoing solution, before the terminal device moves from a coverage area of the second network device to a coverage area of the first network device, the terminal device may send the first indication information to the second network device in advance to indicate the first beam and the first moment, the second network device may forward the first indication information to the first network device, the first network device receives the first indication information, and sends the second indication information to the second network device, the second network device forwards the second indication information to the terminal device, the terminal device may measure the at least one first reference signal based on the second indication information, to obtain the second beam, the terminal device sends, to the second network device, the third indication information indicating the second beam, and the second network device forwards the third indication information to the first network device. The second moment at which the first network device sends the first configuration information is obtained based on the first moment. The first moment may be a future moment, that is, the terminal device may predict the first beam in advance. The second moment is not earlier than the first moment, and the second moment may also be a future moment. When the future second moment arrives, the first network device may send the first configuration information for configuring the second beam, so that a latency caused by determining the first beam after a beam failure can be avoided, to improve transmission reliability.

In some possible implementations, the second indication information indicates the terminal device to measure the at least one first reference signal at a third moment; and
the third moment is earlier than the first moment.

In some possible implementations, the second indication information indicates the terminal device to measure the at least one first reference signal at a third moment; and
the third moment is later than the first moment.

In some possible implementations, after the first moment and before the second moment, the transmission beam of the control channel or the data channel is the first beam.

In some possible implementations, a difference between the second moment and the first moment is less than a preset value.

For beneficial effects of the third aspect, refer to the descriptions of the first aspect.

According to a fourth aspect, a communication apparatus is provided. The communication apparatus is configured to perform the method in any possible implementation of the first aspect, the method in any possible implementation of the second aspect, the method in any possible implementation of the third aspect, or another method described in embodiments of this application. Optionally, the communication apparatus may include a unit for the method described in any embodiment of this application. Optionally, the communication apparatus may include a processing unit and a transceiver unit. The transceiver unit may communicate with the outside. The processing unit is configured to perform data processing. The transceiver unit may also be referred to as a communication interface or a communication unit.

The communication apparatus may be configured to perform an action performed by the terminal device in any possible implementation of the first aspect. In this case, the communication apparatus may be referred to as a terminal device, the transceiver unit is configured to perform a receiving/sending-related operation on a terminal device side in any possible implementation of the first aspect, and the processing unit is configured to perform a processing-related operation on the terminal device side in any possible implementation of the first aspect.

The communication apparatus may be configured to perform an action performed by the first network device in any possible implementation of the second aspect. In this case, the communication apparatus may be referred to as a first network device, the transceiver unit is configured to perform a receiving/sending-related operation on a first network device side in any possible implementation of the second aspect, and the processing unit is configured to perform a processing-related operation on the first network device side in any possible implementation of the second aspect.

The communication apparatus may be configured to perform an action performed by the second network device in any possible implementation of the third aspect. In this case, the communication apparatus may be referred to as a second network device, the transceiver unit is configured to perform a receiving/sending-related operation on a second network device side in any possible implementation of the third aspect, and the processing unit is configured to perform a processing-related operation on the second network device side in any possible implementation of the third aspect.

According to a fifth aspect, a communication apparatus is provided. The communication apparatus includes a processor and a memory. The processor is coupled to the memory. The memory is configured to store a computer program or instructions. The processor is configured to execute the computer program or the instructions stored in the memory, to perform the method in any one of the first aspect or the possible implementations of the first aspect, the method in any one of the second aspect or the possible implementations of the second aspect, the method in any one of the third aspect or the possible implementations of the third aspect, or the method described in another embodiment of this application.

For example, the processor is configured to execute the computer program or the instructions stored in the memory, to enable the communication apparatus to perform the method in any one of the first aspect or the possible implementations of the first aspect, the communication apparatus to perform the method in any one of the second aspect or the possible implementations of the second aspect, or the communication apparatus to perform the method in any one of the third aspect or the possible implementations of the third aspect.

Optionally, the apparatus includes one or more processors.

Optionally, the apparatus may further include the memory coupled to the processor.

Optionally, the apparatus may include one or more memories.

Optionally, the memory and the processor may be integrated together or separately disposed.

Optionally, the apparatus may further include a transceiver.

According to a sixth aspect, a communication system is provided. The communication system includes at least two of the communication apparatus, in the fourth aspect, configured to perform the method in any possible implementation of the first aspect, the communication apparatus, in the fourth aspect, configured to perform the method in any possible implementation of the second aspect, and the communication apparatus, in the fourth aspect, configured to perform the method in any possible implementation of the third aspect. Alternatively, the communication system includes at least two of the communication apparatus, in the fifth aspect, configured to perform the method in any possible implementation of the first aspect, the communication apparatus configured to perform the method in any possible implementation of the second aspect, and the communication apparatus configured to perform the method in any possible implementation of the third aspect.

According to a seventh aspect, a computer-readable storage medium is provided. The computer-readable storage medium stores a computer program (which may also be referred to as instructions or code) used to implement the method in any one of the aspects or the possible implementations of the aspects.

For example, when the computer program is executed by a computer, the computer is enabled to perform the method in any one of the first aspect or the possible implementations of the first aspect. The computer may be a communication apparatus.

For another example, when the computer program is executed by a computer, the computer is enabled to perform the method in any one of the second aspect or the possible implementations of the second aspect. The computer may be a communication apparatus.

For still another example, when the computer program is executed by a computer, the computer is enabled to perform the method in any one of the third aspect or the possible implementations of the third aspect. The computer may be a communication apparatus.

According to an eighth aspect, this application provides a chip, including a processor. The processor is configured to read and execute a computer program stored in a memory, to perform the method in the first aspect and any possible implementation of the first aspect, the method in the second aspect and any possible implementation of the second aspect, the method in the third aspect and any possible implementation of the third aspect, or the method described in another embodiment of this application.

Optionally, the chip further includes the memory, and the memory and the processor are connected by using a circuit or a wire.

According to a ninth aspect, this application provides a computer program product. The computer program product includes a computer program (which may also be referred to as instructions or code). When the computer program is executed by a computer, the computer is enabled to implement the method in any one of the first aspect or the possible implementations of the first aspect. Alternatively, when the computer program is executed by a computer, the computer is enabled to implement the method in any one of the second aspect or the possible implementations of the second aspect. Alternatively, when the computer program is executed by a computer, the computer is enabled to implement the method in any one of the third aspect or the possible implementations of the third aspect. Alternatively, when the computer program is executed by a computer, the computer is enabled to implement the method in the implementation in any embodiment of this application.

According to a tenth aspect, this application provides a communication apparatus, including a unit configured to implement the method in any embodiment of this application.

### BRIEF DESCRIPTION OF DRAWINGS

FIG. 1 is a schematic diagram of a communication system according to an embodiment of this application;
FIG. 2 is a schematic diagram of an application scenario according to an embodiment of this application;
FIG. 3 is a schematic diagram of another application scenario according to an embodiment of this application;
FIG. 4 is a schematic diagram of still another application scenario according to an embodiment of this application;
FIG. 5 is a schematic diagram of still another application scenario according to an embodiment of this application;
FIG. 6 is a schematic diagram of a beam according to an embodiment of this application;
FIG. 7 is a schematic diagram of an information transmission method according to an embodiment of this application;
FIG. 8 is a schematic diagram of a relationship between different moments according to an embodiment of this application;
FIG. 9 is a schematic diagram of another relationship between different moments according to an embodiment of this application;
FIG. 10 is a schematic diagram of still another relationship between different moments according to an embodiment of this application;
FIG. 11 is a schematic diagram of another information transmission method according to an embodiment of this application;
FIG. 12 is a schematic diagram of still another information transmission method according to an embodiment of this application; and
FIG. 13 is a schematic block diagram of a communication apparatus according to an embodiment of this application.

### DESCRIPTION OF EMBODIMENTS

The technical solutions in embodiments of this application are described below with reference to the accompanying drawings in embodiments of this application.

It should be understood that division into manners, cases, categories, and embodiments in embodiments of this application is merely for ease of description, and should not constitute a special limitation. Features in various manners, categories, cases, and embodiments may be combined without contradiction.

It should be further understood that "first", "second", and "third" in embodiments of this application are merely for differentiation, and should not constitute any limitation on this application. It should be further understood that in embodiments of this application, sequence numbers of the processes do not mean execution sequences. The execution sequences of the processes should be determined based on functions and internal logic of the processes, and should not constitute any limitation on the implementation processes of embodiments of this application.

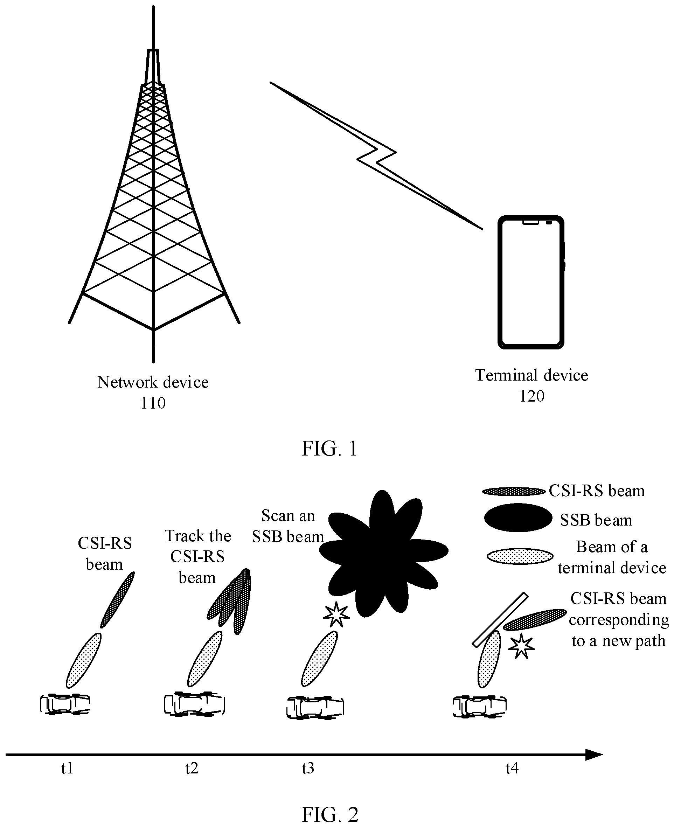

FIG. 1 is a schematic diagram of a communication system to which an embodiment of this application is applicable. As shown in FIG. 1, the wireless communication system may include a network device 110 and one or more terminal devices (for example, a terminal device 120 shown in FIG. 1) for communication. When the network device 110 sends a signal, the network device 110 is a transmit end, and the terminal device 120 is a receive end. On the contrary, when the terminal device 120 sends a signal, the terminal device 120 is a transmit end, and the network device 110 is a receive end.

The network device 110 may be an access network device configured to communicate with the terminal device 120. The access network device may be a base transceiver station (base transceiver station, BTS) in a GSM system or a CDMA system, may be a NodeB (NodeB, NB) in a WCDMA system, may be an evolved NodeB (evolved NodeB, eNB or eNodeB) in an LTE system, may be a radio controller in a cloud radio access network (cloud radio access network, CRAN) scenario, or may be a next-generation NodeB (gNodeB, gNB) in a 5th generation mobile communication technology (5th generation mobile network, 5G), that is, new radio (new radio, NR), or a base station in another future network system. Alternatively, the network device 110 may be a relay station, an access point, a vehicle-mounted device, a wearable device, a network device in a future 5G network, a network device in a future evolved PLMN network, or the like. This is not limited in embodiments of this application.

The terminal device 120 may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a handheld device, a wearable device, a computing device, a portable device, a terminal in a form of a vehicle-mounted device or the like, a smartphone, smart glasses, a terminal device in a 5G network, a terminal device in a future evolved public land mobile network (public land mobile network, PLMN), or the like. This is not limited in embodiments of this application.

For ease of description, a device number is omitted below. For example, the "terminal device" represents the "terminal device 120", and the "network device" represents the "network device 110".

In new radio (new radio, NR), a first network device and a terminal device need to perform beam pairing, and communicate with each other by using a paired beam. However, if the paired beam fails or link quality deteriorates, beam re-pairing needs to be performed. In a beam re-pairing process, the first network device needs to periodically send a reference signal, and the terminal device performs a coarse measurement. Then, the first network device sends the reference signal, and the terminal device performs a fine measurement, to complete beam pairing. In this way, the beam re-pairing process between the terminal device and the first network device takes a long time. In the re-pairing process between the terminal device and the first network device, data cannot be transmitted between the terminal device and the first network device or transmitted data may be lost. Therefore, data transmission with a high latency requirement cannot be met, and transmission reliability is poor.

For example, the first network device needs to periodically send a synchronization signal block (synchronization signal block, SSB) by using different beams. The terminal device may measure reference signal received power (reference signal received power, RSRP) of the SSB, determine a coarse beam based on the RSRP, and indicate the determined coarse beam to the first network device. Then, the first network device sends a channel state information reference signal (channel state information reference signal, CSI-RS) by using a plurality of fine beams corresponding to the coarse beam. The terminal device may measure RSRP of the CSI-RS, determine a fine beam, and indicate the determined fine beam to the first network device. In this way, data may be transmitted between the terminal device and the first network device by using the fine beam. In the foregoing process, data possibly cannot be transmitted or data may be lost. Therefore, transmission reliability is poor.

In embodiments of this application, a beam used by the first network device to send the SSB may also be referred to as an SSB beam, and a beam used by the first network device to send the CSI-RS may also be referred to as a CSI-RS beam.

Optionally, the terminal device may determine, by using a channel quality indicator (channel quality indicator, CQI) and/or a block error rate (block error rate, BLER), whether link quality deteriorates, and whether a CSI-RS beam currently used by the first network device can continue to be used. For example, if the BLER is greater than a preset bit error rate value, it indicates that a link fails and the CSI-RS beam currently used by the first network device is unavailable. The preset bit error rate value is a value specified in a protocol or a value configured by the first network device. For example, the preset bit error rate value is 10%. Alternatively, if a decrement of the CQI is greater than a decrement threshold, it indicates that a link fails and the CSI-RS beam currently used by the first network device is unavailable. The decrement threshold is a value specified in a protocol or a value configured by the first network device.

The following describes some possible usage scenarios.

### Scenario 1: Blocking scenario

When a beam between a terminal device and a first network device is blocked, signal attenuation is severe, and link quality deteriorates, or a link failure is caused. After entering a blocking environment, the terminal device needs to re-determine a CSI-RS beam. As shown in FIG. 2, the terminal device is a vehicle, and at a moment t1, a CSI-RS beam paired between the terminal device and the first network device may be used to transmit a data channel or a control channel. As the terminal device moves, at a moment t2, the terminal device may continue to scan a CSI-RS beam of the first network device, to track a CSI-RS beam with good signal quality. As the terminal device moves, at a moment t3, a blockage occurs between the terminal device and the first network device. Consequently, a link between the terminal device and the first network device fails or the link quality deteriorates, and the terminal device needs to rescan an SSB beam sent by the first network device. The terminal device obtains an SSB beam with good reference signal received power (reference signal received power, RSRP) through scanning, and reports the SSB beam to the first network device. The terminal device initiates random access to the first network device by using the SSB beam obtained through scanning. After the random access succeeds, the first network device sends a CSI-RS by using a plurality of CSI-RS beams corresponding to the SSB beam. The terminal device scans the plurality of CSI-RS beams, and determines, at a moment t4, a CSI-RS beam with good RSRP as a CSI-RS beam corresponding to a path existing after the blocking environment is entered. The terminal device may indicate the CSI-RS beam corresponding to the path existing after the blocking environment is entered to the first network device. In this way, the terminal device and the first network device may transmit the data channel or the control channel by using the CSI-RS beam corresponding to the path existing after the blocking environment is entered. That is, a blocking event occurs at the moment t3, and the CSI-RS beam corresponding to the path existing after the blocking environment is entered is determined at the moment t4. Consequently, transmission is interrupted or the link quality deteriorates in a time period from the moment t3 to the moment t4. Because the first network device periodically sends an SSB, it takes a long time for the terminal device to scan the SSB beam and determine the SSB with good RSRP, that is, there is a long time period from t3 to t4. In this case, transmission is interrupted or the link quality deteriorates for a long time, a transmission latency is affected, and particularly, great impact is imposed on an ultra-reliable low-latency communication (ultra-reliable low-latency communication, URLLC) service.

### Scenario 2: Scenario of leaving a blocking environment

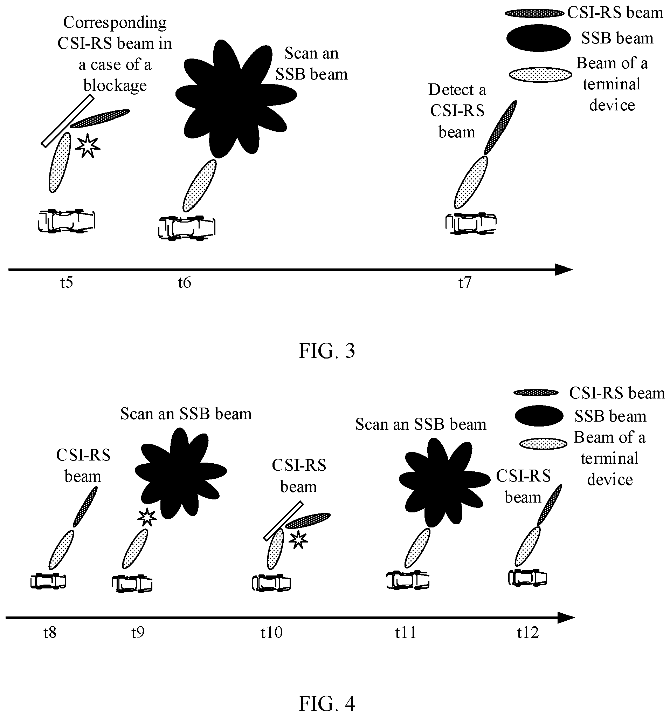

When a terminal device and a first network device are in the blocking environment, the first network device may send a data channel or a control channel by using a CSI-RS beam. As the terminal device moves, the terminal device needs to leave the blocking environment. After the terminal device leaves the blocking environment, as a blockage disappears, the CSI-RS beam used by the first network device in the blocking environment may not be a best CSI-RS beam. After the terminal device leaves the blocking environment, if the first network device continues to use the CSI-RS beam in the blocking environment, link quality may deteriorate, or a link failure may be caused. As shown in FIG. 3, the terminal device is a vehicle, and at a moment t5, a CSI-RS beam paired between the terminal device and the first network device in the blocking environment may be used to transmit the data channel or the control channel. As the terminal device moves, at a moment t6, the terminal device moves out of a blocking area. Consequently, a link between the terminal device and the first network device fails or the link quality deteriorates, and the terminal device needs to rescan an SSB beam sent by the first network device. The terminal device obtains an SSB beam with good reference signal received power (reference signal received power, RSRP) through scanning, and reports the SSB beam to the first network device. The terminal device initiates random access to the first network device by using the SSB beam obtained through scanning. After the random access succeeds, the first network device sends a CSI-RS by using a plurality of CSI-RS beams corresponding to the SSB beam. The terminal device scans the plurality of CSI-RS beams, and determines, at a moment t7, a CSI-RS beam with good RSRP as a CSI-RS beam corresponding to a new path. The terminal device may indicate the CSI-RS beam corresponding to the path existing after the blockage disappears to the first network device. In this way, the terminal device and the first network device may transmit the data channel or the control channel by using the CSI-RS beam corresponding to the path existing after the blockage disappears. That is, a blocking event disappears at the moment t6, and the CSI-RS beam corresponding to the path existing after the blockage disappears is determined at the moment t7. Consequently, transmission is interrupted or the link quality deteriorates in a time period from the moment t6 to the moment t7. Because the first network device periodically sends an SSB, it takes a long time for the terminal device to scan the SSB beam and determine the SSB with good RSRP, that is, there is a long time period from t6 to t7. In this case, transmission is interrupted or the link quality deteriorates for a long time, a transmission latency is affected, and particularly, great impact is imposed on ultra-reliable low-latency communication (ultra-reliable low-latency communication, URLLC).

### Scenario 3: Scenario of entering a blocking environment and leaving the blocking environment

When a beam between a terminal device and a first network device is blocked, signal attenuation is severe, and link quality deteriorates, or a link failure is caused. After entering the blocking environment, the terminal device needs to re-determine a CSI-RS beam. When the terminal device and the first network device are in the blocking environment, the first network device may send a data channel or a control channel by using the re-determined CSI-RS beam. As the terminal device moves, the terminal device needs to leave the blocking environment. After the terminal device leaves the blocking environment, as a blockage disappears, the CSI-RS beam used by the first network device in the blocking environment may not be a best CSI-RS beam. After the terminal device leaves the blocking environment, if the first network device continues to use the CSI-RS beam in the blocking environment, link quality may deteriorate, or a link failure may be caused. As shown in FIG. 4, the terminal device is a vehicle, and at a moment t8, a CSI-RS beam paired between the terminal device and the first network device may be used to transmit the data channel or the control channel. As the terminal device moves, at a moment t9, a blockage occurs between the terminal device and the first network device. Consequently, a link between the terminal device and the first network device fails or the link quality deteriorates, and the terminal device needs to rescan an SSB beam sent by the first network device. The terminal device obtains an SSB beam with good RSRP through scanning, and reports the SSB beam to the first network device. The terminal device initiates random access to the first network device by using the SSB beam obtained through scanning. After the random access succeeds, the first network device sends a CSI-RS by using a plurality of CSI-RS beams corresponding to the SSB beam. The terminal device scans the plurality of CSI-RS beams, and determines, at a moment t10, a CSI-RS beam with good RSRP as a CSI-RS beam corresponding to a path existing after the blockage occurs. The terminal device may indicate, to the first network device, the CSI-RS beam corresponding to the path existing after the blockage occurs. In this way, the terminal device and the first network device may transmit the data channel or the control channel by using the CSI-RS beam corresponding to the path existing after the blockage occurs. That is, a blocking event occurs at the moment t9, and the CSI-RS beam corresponding to the new path is determined at the moment t10. Consequently, transmission is interrupted or the link quality deteriorates in a time period from the moment t9 to the moment t10. Because the first network device periodically sends an SSB, it takes a long time for the terminal device to scan the SSB beam and determine the SSB with good RSRP, that is, there is a long time period from t9 to t10. In this case, transmission is interrupted or the link quality deteriorates for a long time, a transmission latency is affected, and particularly, great impact is imposed on a URLLC service. As the terminal device moves, at a moment t11, the terminal device moves out of a blocking area. Consequently, the link between the terminal device and the first network device fails or the link quality deteriorates, and the terminal device needs to rescan an SSB beam sent by the first network device. The terminal device obtains an SSB beam with good RSRP through scanning, and reports the SSB beam to the first network device. The terminal device initiates random access to the first network device by using the SSB beam obtained through scanning. After the random access succeeds, the first network device sends a CSI-RS by using a plurality of CSI-RS beams corresponding to the SSB beam. The terminal device scans the plurality of CSI-RS beams, and determines, at a moment t12, a CSI-RS beam with good RSRP as a CSI-RS beam corresponding to a path existing after the terminal device leaves the blocking environment. The terminal device may indicate the CSI-RS beam corresponding to the path existing after the terminal device leaves the blocking environment to the first network device. In this way, the terminal device and the first network device may transmit the data channel or the control channel by using the CSI-RS beam corresponding to the path existing after the terminal device leaves the blocking environment. That is, a blocking event disappears at the moment t11, and the CSI-RS beam corresponding to the path existing after the blockage disappears is determined at the moment t12. Consequently, transmission is interrupted or the link quality deteriorates in a time period from the moment t11 to the moment t12. Because the first network device periodically sends an SSB, it takes a long time for the terminal device to scan the SSB beam and determine the SSB with good RSRP, that is, there is a long time period from t11 to t12. In this case, transmission is interrupted or the link quality deteriorates for a long time, a transmission latency is affected, and particularly, great impact is imposed on a URLLC service.

### Scenario 4: Scenario of switching a network device

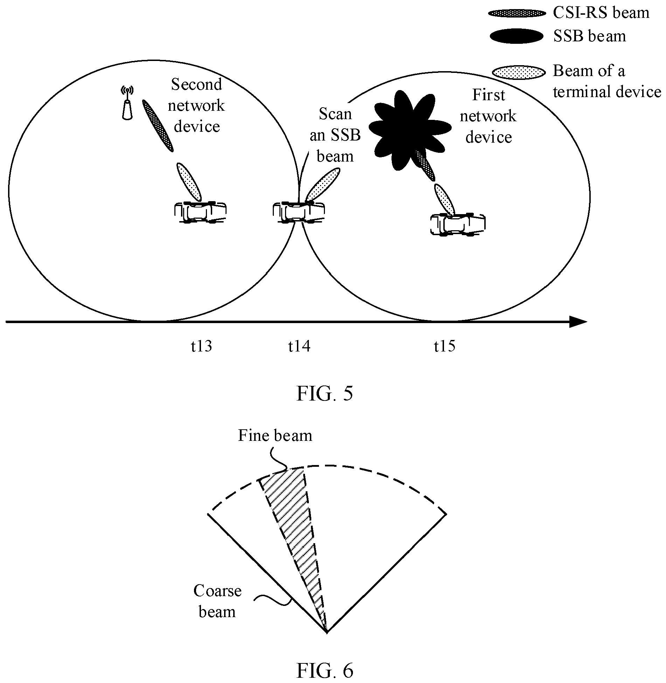

As a terminal device moves, the terminal device may move from a coverage area of a second network device to a coverage area of a first network device. When the terminal device is in the coverage area of the second network device, a CSI-RS beam of the second network device is a transmission beam of a data channel or a control channel. When the terminal device moves from the coverage area of the second network device to the coverage area of the first network device, because the terminal device moves away from the coverage area of the second network device, if the terminal device continues to transmit data with the CSI-RS beam of the second network device, a transmission failure may be caused or link quality may deteriorate, and a transmission latency is affected. For example, as shown in FIG. 5, the terminal device is a vehicle, and at a moment t13, a CSI-RS beam paired between the terminal device and the second network device may be used to transmit the data channel or the control channel. As the terminal device moves, at a moment t14, the terminal device moves away from the coverage area of the second network device, and moves to a boundary between the first network device and the second network device. In a process in which the terminal device moves away from the coverage area of the first network device, the link quality deteriorates, and the terminal device needs to rescan an SSB beam sent by the first network device. The terminal device obtains an SSB beam with good RSRP through scanning, and reports the SSB beam to the second network device. The second network device sends the SSB to the first network device. The terminal device obtains, by using the SSB beam obtained through scanning, an SSB beam corresponding to optimal RSRP, and initiates random access to the first network device by using the SSB beam. After the random access succeeds, the first network device sends a plurality of CSI-RS beams corresponding to the SSB beam. The terminal device scans the plurality of CSI-RS beams, and determines a CSI-RS beam with good RSRP as a CSI-RS beam of the first network device at a moment t15. The terminal device may indicate the CSI-RS beam to the first network device. In this way, the terminal device and the first network device may transmit the data channel or the control channel by using the CSI-RS beam of the first network device. That is, the link quality starts to deteriorate at the moment t14, and the CSI-RS beam of the first network device is determined at the moment t15. Consequently, transmission is interrupted or the link quality deteriorates in a time period from the moment t14 to the moment t15. Because the first network device periodically sends an SSB, it takes a long time for the terminal device to scan the SSB beam and determine the SSB with good RSRP, that is, there is a long time period from t14 to 115. In this case, transmission is interrupted or the link quality deteriorates for a long time, a transmission latency is affected, and particularly, great impact is imposed on a URLLC service.

In embodiments of this application, the terminal device may send first indication information to the first network device, where the first indication information indicates a first beam and a first moment; and then the terminal device receives second indication information, where the second indication information indicates the terminal device to measure at least one first reference signal. Because there is a quasi co-location (quasi co-location, QCL) relationship between the at least one first reference signal and the first beam, the terminal device may measure the at least one first reference signal to determine a second beam, and the second beam may be used as a transmission beam of a data channel or a control channel. The first moment may be a future moment. Therefore, in embodiments of this application, the first beam at a future moment may be indicated to the first network device in advance, and the second beam may be determined based on the at least one first reference signal that has the QCL relationship with the first beam. In this way, a case in which data transmission cannot be completed or data is lost can be avoided, to improve transmission reliability.

The following describes terms in this application in detail.

### 1. Beam (beam)

The beam in an NR protocol may be embodied as a spatial domain filter (spatial domain filter) that is also referred to as a spatial filter (spatial filter) or a spatial parameter (spatial parameter). A beam used to send a signal may be referred to as a transmission beam (transmission beam, Tx beam), or may be referred to as a spatial domain transmission filter (spatial domain transmission filter) or a spatial transmission parameter (spatial transmission parameter). A beam used to receive a signal may be referred to as a reception beam (reception beam, Rx beam), or may be referred to as a spatial domain receive filter (spatial domain receive filter) or a spatial receive parameter (spatial RX parameter).

The transmission beam may refer to distribution of signal strength formed in different spatial directions after a signal is transmitted through an antenna. The reception beam may refer to distribution of signal strength that is of a radio signal received from the antenna and that is in different spatial directions.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

Optionally, the wide beam may also be referred to as a coarse beam. Optionally, the narrow beam may also be referred to as a fine beam or a sub-beam (sub-beam). Optionally, a first network device may send an SSB by using the coarse beam. Optionally, the first network device may send a channel state information reference signal (channel state information reference signal, CSI-RS) by using the fine beam. Optionally, if there is a QCL relationship between the coarse beam and the CSI-RS, a direction of the coarse beam includes a direction of the fine beam for sending the CSI-RS. Optionally, the fine beam may be a component, a subcomponent, or a beam component (beam component) of the coarse beam. As shown in FIG. 6, the fine beam may be a sub-direction of a coarse beam or at L degrees of a beam. For example, L is equal to 5.

Optionally, a plurality of beams having a same or similar communication feature are considered as one beam. One beam may include one or more antenna ports, configured to transmit a data channel, a control channel, a sounding signal, and the like. The one or more antenna ports forming the beam may also be considered as an antenna port set.

Optionally, one beam corresponds to one beam index. Therefore, the beam index may be used to uniquely identify the one beam.

### 2. SSB

The SSB includes a primary synchronization signal (primary synchronization signal, PSS), a secondary synchronization signal (secondary synchronization signal, SSS), a physical broadcast channel (physical broadcast channel, PBCH), and a demodulation reference signal (demodulation reference signal, DMRS) required for demodulating the PBCH. The PSS and the SSS are used by a terminal device to perform downlink synchronization, including timing synchronization, frame synchronization, and symbol synchronization. The PSS and the SSS are further used to obtain a cell identifier (ID) and measure cell signal quality. The PBCH carries master system information (master information block, MIB) content.

### 3. QCL relationship

That there is a QCL relationship between a beam and a reference signal may be understood as follows: The beam and a beam for sending the reference signal are similar beams, or the beam is approximately related to a beam for sending the reference signal.

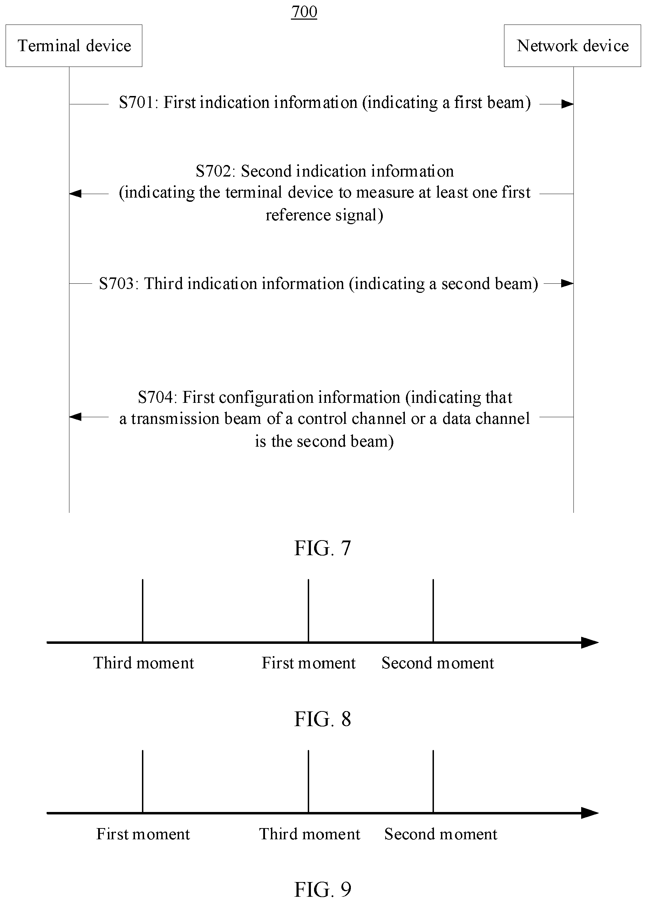

With reference to FIG. 7, the following describes an information transmission method 700 provided in an embodiment of this application. As shown in FIG. 7, the method 700 includes the following steps.

S701: A terminal device sends first indication information to a first network device, and the first network device receives the first indication information from the terminal device, where the first indication information indicates a first beam.

Optionally, the first indication information indicates the first beam and a first moment. Optionally, the first moment is a future moment, and the first network device may determine, based on the first moment indicated by the first indication information, that the first beam is a beam at the future first moment.

Optionally, in a blocking scenario, the first moment may be a moment at which the terminal device enters a blocking environment or a moment at which a blockage occurs. For example, in the scenario shown in FIG. 2, the first moment is t3. Optionally, the terminal device may predict a first position at which the blockage occurs, and the terminal device may predict, based on a current position of the terminal device, a movement speed of the terminal device, and a current moment, that a future moment at which the terminal device arrives at the first position is the first moment.

Optionally, in a scenario of leaving a blocking environment, the first moment may be a moment at which the terminal device leaves the blocking environment. For example, in the scenario shown in FIG. 3, the first moment is t6. Optionally, the terminal device may predict a second position at which a blockage disappears, and the terminal device may predict, based on a current position of the terminal device, a movement speed of the terminal device, and a current moment, that a moment at which the terminal device arrives at the second position is the first moment.

Optionally, the first indication information indicates the first beam and indicates that the first beam is a future beam. Optionally, the first indication information indicates the first beam and indicates that the first beam is an SSB beam to be paired between the first network device and the terminal device.

Optionally, the first moment may be replaced with a first time period. The first indication information may indicate the first time period. Optionally, the first indication information may indicate the first time period by indicating a start moment of the first time period. A length of the first time period may be a preset length. That is, if the first indication information indicates the first moment, it may be understood as that the first indication information indicates the first time period.

Optionally, when the terminal device performs S701, the terminal device is at the current position, and the first indication information may indicate the first beam and the first position. Optionally, the first position is a future position of the terminal device, and the first network device may obtain a real-time position of the terminal device. The first position is different from the current position. Therefore, the first network device may determine, based on the first position indicated by the first indication information, that the first beam is a future beam.

Optionally, the terminal device may determine the first moment based on the current position of the terminal device, the current moment, the movement speed of the terminal device, and the first position. The terminal device may determine, based on a distance between the first position and the current position of the terminal device, the current moment, and the movement speed of the terminal device, the first moment at which the terminal device moves to the first position.

Optionally, the first beam is a wide beam, a coarse beam, or an SSB beam.

Optionally, if the first indication information indicates the first beam, the first indication information may be a first index, and the first index may uniquely indicate the first beam.

Optionally, before S701, the method 700 may further include: The terminal device determines the first beam.

The terminal device may determine the first beam in any one of the following manners.

### Manner 1: The terminal device predicts the first beam.

Optionally, the terminal device may predict the first beam based on historical data of another terminal device. Optionally, the terminal device may predict the first beam based on a movement path of the terminal device and the historical data of the another terminal device.

Optionally, the historical data of the another terminal device may include a movement path of the another terminal device and an SSB beam paired between the first network device and the another terminal device when the another terminal device moves to the first position.

Optionally, the current position of the terminal device is the current position, the movement path of the terminal device passes through the current position and the future first position, and that the terminal device predicts the first beam based on a movement path of the terminal device and the historical data of the another terminal device includes: The terminal device uses the SSB beam paired between the first network device and the another terminal device when the another terminal device moves to the first position as the first beam. That is, when a correspondence between an SSB beam and space does not change, the SSB beam paired between the first network device and the another terminal device when the another terminal device moves to the first position may be used as the first beam paired between the first network device and the terminal device when the terminal device moves to the first position.

Optionally, the current position of the terminal device is the current position, the movement path of the terminal device passes through the current position and the future first position, and that the terminal device predicts the first beam based on a movement path of the terminal device and the historical data of the another terminal device includes: If a fifth beam is the same as a sixth beam, the terminal device determines a seventh beam as the first beam. The fifth beam is a beam paired between the first network device and the another terminal device before the another terminal device moves to the first position, the sixth beam is a beam paired between the first network device and the terminal device before the terminal device moves to the first position, and the seventh beam is a beam paired between the first network device and the another terminal device after the another terminal device moves to the first position, and is the first beam. For example, in the blocking scenario, the fifth beam is an SSB beam corresponding to a CSI-RS beam paired between the first network device and the another terminal device before the another terminal device enters the blocking environment, the seventh beam is an SSB beam corresponding to a CSI-RS beam paired between the first network device and the another terminal device after the another terminal device enters the blocking environment, and the sixth beam is an SSB beam corresponding to a CSI-RS beam paired between the first network device and the terminal device before the terminal device enters the blocking environment.

Optionally, the movement path of the terminal device passes through the current position and the future first position, and that the terminal device predicts the first beam based on a movement path of the terminal device and the historical data of the another terminal device includes: If a fifth beam is different from a sixth beam, the terminal device determines the first beam based on a seventh beam and a difference between an index of the sixth beam and an index of the fifth beam. Optionally, that the terminal device determines the first beam based on a seventh beam and a difference between an index of the sixth beam and an index of the fifth beam includes: The terminal device determines an index of the seventh beam plus the difference as an index of the first beam. The fifth beam is a beam paired between the first network device and the another terminal device before the another terminal device moves to the first position, the sixth beam is a beam paired between the first network device and the terminal device before the terminal device moves to the first position, and the seventh beam is a beam paired between the first network device and the another terminal device after the another terminal device moves to the first position, and is the first beam. For example, if all of the fifth beam, the sixth beam, and the seventh beam are SSB beams, the index of the fifth beam is 1, the index of the sixth beam is 3, and the index of the seventh beam is 5, the index of the first beam is 7 (3+(5-1)). That is, if a correspondence between an SSB beam and space changes, the terminal device may determine, based on a variation between a beam index existing after the another terminal device moves to the first position and a beam index existing before the another terminal device moves to the first position, the first beam paired between the first network device and the terminal device when the terminal device moves to the first position.

### Manner 2: A cloud predicts the first beam, and indicates the first beam to the terminal device.

A process of predicting the first beam by the cloud is the same as a process of predicting the first beam by the terminal device. A difference lies in that the terminal device may report a movement path of the terminal device to the cloud, the terminal device may report position information of the terminal device to the cloud in real time, and the cloud determines the first beam based on the position information of the terminal device. For example, the position information of the terminal device indicates the current position of the terminal device, and the cloud determines the first beam based on the current position, the movement path of the terminal device, and historical data of another terminal device.

That is, in S701, the terminal device may predict, based on the historical data of the another terminal device, the first beam to be paired between the first network device and the terminal device, indicate the first beam to the first network device by using the first indication information, and indicate that the first beam is a beam to be paired between the first network device and the terminal device, and is not a beam currently paired with the terminal device. For example, in the blocking scenario in FIG. 2, the terminal device may predict, at a moment t1 based on the historical data of the another terminal device, that a blockage occurs at a future moment t3. In this case, the first moment is t3, and the terminal device may indicate the first beam and t3 by using the first indication information. In this way, after the blockage occurs at the moment t3, the terminal device does not need to measure an SSB to determine the first beam, to reduce a latency.

Optionally, S701 includes: The terminal device sends the first indication information to the first network device through a physical uplink shared channel (physical uplink shared channel, PUSCH), and the first network device receives the first indication information through the PUSCH.

Optionally, the first network device configures a periodic resource used to report and track a CSI-RS beam for the terminal device. S701 includes: The terminal device may send the first indication information to the first network device on the resource for reporting and tracking a CSI-RS, and the first network device receives the first indication information on the configured periodic resource used to report and track a CSI-RS beam.

Optionally, S701 includes: The terminal device sends the first indication information to the first network device through a physical uplink control channel (physical uplink control channel, PUCCH), and the first network device receives the first indication information through the PUCCH. Specifically, the first network device may send downlink control information (downlink control information, DCI) to the terminal device, where the DCI may indicate a resource for sending the first indication information. The terminal device sends the first indication information to the first network device on the resource indicated by the DCI, and the first network device receives the first indication information on the resource indicated by the DCI.

S702: The first network device sends second indication information, and the terminal device receives the second indication information, where the second indication information indicates the terminal device to measure at least one first reference signal.

Optionally, the at least one first reference signal may be at least one CSI-RS.

Optionally, there is a QCL relationship between the at least one first reference signal and the first beam. Optionally, a beam for sending the at least one first reference signal and the first beam are similar beams or approximately related beams. There is a QCL relationship between the at least one first reference signal and the first beam. Therefore, a case in which the terminal device needs to search full space for the at least one first reference signal is avoided. In this way, a beam search range can be narrowed, and a latency in determining a second beam can be reduced.

Optionally, a direction of the first beam includes a direction of the beam for sending the at least one first reference signal.

Optionally, the second indication information may be configuration information of the at least one first reference signal. In this way, the terminal device may measure the at least one first reference signal based on the configuration information of the at least one first reference signal, and determine the second beam. Optionally, the configuration information of the at least one first reference signal may indicate a time domain position and/or a frequency position at which the first network device sends the at least one first reference signal.

Optionally, the at least one first reference signal may be at least one CSI-RS sent by the first network device.

Optionally, the first network device may respectively send the at least one CSI-RS by using at least one sub-beam corresponding to the first beam, and the terminal device may measure the at least one CSI-RS, and determine a sub-beam corresponding to a CSI-RS with high or highest RSRP as the second beam.

The following describes measurement of the at least one first reference signal by the terminal device in different cases.

### Case 1: The terminal device measures the at least one first reference signal before the first moment.

Optionally, the second indication information indicates the terminal device to measure the at least one first reference signal at a third moment. The third moment is not later than the first moment. The terminal device needs to measure the at least one first reference signal at the third moment before the first moment. That is, the terminal device needs to measure the at least one first reference signal in advance and determine the second beam. In this way, after the first moment, the first network device may directly send the control channel or the data channel by using the second beam, to reduce a latency in determining the second beam by the terminal device after the first moment. Optionally, the first beam is an SSB beam, and the second beam is a CSI-RS beam. In this way, the terminal device may determine the CSI-RS beam corresponding to the SSB beam before the first moment, to avoid a latency caused by scanning the SSB beam and determining the CSI-RS beam after the first moment.

Optionally, the third moment may be replaced with a third time period. The second indication information may indicate the terminal device to measure the at least one first reference signal in the third time period. Optionally, the second indication information may indicate the third time period by indicating a start moment of the third time period. A length of the third time period may be a preset length. That is, if the second indication information indicates the third moment, it may be understood as that the second indication information indicates the third time period. In this way, the terminal device may measure the at least one first reference signal in the third time period.

For example, in the blocking scenario shown in FIG. 2, the first moment may be t3, and the terminal device may determine the CSI-RS beam corresponding to the SSB beam before the moment t3. That is, the terminal device needs to determine, before a blockage occurs, the CSI-RS beam to be paired between the first network device and the terminal device after the blockage occurs. This helps reduce a latency, for example, may reduce a latency in a time period from the moment t3 to a moment t4 shown in FIG. 2.

For another example, in the scenario of leaving a blocking environment shown in FIG. 3, the first moment may be a moment t6, and the terminal device may determine the CSI-RS beam corresponding to the SSB beam before the moment t6. That is, the terminal device needs to determine, before leaving the blocking environment, the CSI-RS beam to be paired between the first network device and the terminal device after the blockage disappears. This helps reduce a latency, for example, may reduce a latency in a time period from the moment t6 to a moment t7 shown in FIG. 3.

For still another example, in the scenario of entering a blocking environment and then leaving the blocking environment shown in FIG. 4, the first moment may be a moment t9, and the terminal device may determine the CSI-RS beam corresponding to the SSB beam before the moment t9. That is, the terminal device needs to determine, before a blockage occurs, the CSI-RS beam to be paired between the first network device and the terminal device after the blockage occurs. This helps reduce a latency, and may reduce a latency in a time period from the moment t9 to a moment t10 shown in FIG. 4. Alternatively, the first moment may be a moment t11, and the terminal device may determine the CSI-RS beam corresponding to the SSB beam before the moment t11. That is, the terminal device needs to determine, before leaving the blocking environment, the CSI-RS beam to be paired between the first network device and the terminal device after the blockage disappears. This helps reduce a latency, and may reduce a latency in a time period from the moment t11 to a moment t12 shown in FIG. 4. In this way, in the scenario shown in FIG. 4, the latencies in the two time periods from the moment t9 to the moment t10 and from the moment t11 to the moment t12 may be reduced.

### Case 2: The terminal device measures the at least one first reference signal after the first moment.

Optionally, the second indication information indicates the terminal device to measure the at least one first reference signal at a third moment. The third moment is not earlier than the first moment. The terminal device may measure the at least one first reference signal at the third moment after the first moment. Optionally, the first beam is an SSB beam, and the second beam is a CSI-RS beam. In this way, the terminal device may determine the SSB beam before the first moment, and determine the CSI-RS beam corresponding to the SSB beam after the first moment.

Optionally, the third moment may be replaced with a third time period. The second indication information may indicate the terminal device to measure the at least one first reference signal in the third time period. Optionally, the second indication information may indicate the third time period by indicating a start moment of the third time period. A length of the third time period may be a preset length. That is, if the second indication information indicates the third moment, it may be understood as that the second indication information indicates the third time period. In this way, the terminal device may measure the at least one first reference signal in the third time period.

For example, in the blocking scenario shown in FIG. 2, the first moment may be t3, and the terminal device may determine the SSB beam before the moment t3, and determine the CSI-RS beam corresponding to the SSB beam after the moment t3. That is, the terminal device needs to determine, before a blockage occurs, the SSB beam corresponding to the first network device and the terminal device after the blockage occurs, and the terminal device needs to determine the CSI-RS beam corresponding to the SSB beam after the blockage occurs. This helps reduce a latency in determining the SSB beam. It takes a long time for the terminal device to scan the SSB beam. Therefore, the terminal device determines the SSB beam in most of time in a time period from the moment t3 to a moment t4. After the terminal device enters the blocking environment, most of the time in the time period from the moment t3 to the moment t4 shown in FIG. 2 may be saved.

For another example, in the scenario of leaving a blocking environment shown in FIG. 3, the first moment may be a moment t6, and the terminal device may determine the SSB beam before the moment t6, and determine the CSI-RS beam corresponding to the SSB beam after the moment t6. That is, the terminal device needs to determine, before leaving the blocking environment, the SSB beam to be paired between the first network device and the terminal device after the blockage disappears, and the terminal device needs to determine the CSI-RS beam corresponding to the SSB beam after the blockage disappears. This helps reduce a latency in determining the SSB beam. It takes a long time for the terminal device to scan the SSB beam. Therefore, the terminal device determines the SSB beam in most of time in a time period from the moment t6 to a moment t7. After the terminal device leaves the blocking environment, most of the time in the time period from the moment t6 to the moment t7 shown in FIG. 3 may be saved.

For still another example, in the scenario of entering a blocking environment and then leaving the blocking environment shown in FIG. 4, the first moment may be a moment t9, and the terminal device may determine the SSB beam before the moment t9, and determine the CSI-RS beam corresponding to the SSB beam after the moment t9. That is, the terminal device needs to determine, before a blockage occurs, the SSB beam to be paired between the first network device and the terminal device after the blockage occurs, and the terminal device needs to determine the CSI-RS beam corresponding to the SSB beam after entering the blocking environment. This helps reduce a latency in determining the SSB beam. It takes a long time for the terminal device to scan the SSB beam. Therefore, the terminal device determines the SSB beam in most of time in a time period from the moment t9 to a moment t10. After the terminal device enters the blocking environment, most of the time in the time period from the moment t9 to the moment t 10 shown in FIG. 4 may be saved. Alternatively, the first moment may be a moment t11, and the terminal device may determine the SSB beam before the moment t11, and determine the CSI-RS beam corresponding to the SSB beam after the moment t11. That is, the terminal device needs to determine, before leaving the blocking environment, the SSB beam to be paired between the first network device and the terminal device after the blockage disappears, and the terminal device needs to determine the CSI-RS beam corresponding to the SSB beam after the blockage disappears. This helps reduce a latency in determining the SSB beam. It takes a long time for the terminal device to scan the SSB beam. Therefore, the terminal device determines the SSB beam in most of time in a time period from the moment t11 to a moment t12. After the terminal device leaves the blocking environment, most of the time in the time period from the moment t11 to the moment t12 shown in FIG. 4 may be saved. In this way, in the scenario shown in FIG. 4, most of the time in the time period from the moment t9 to the moment t10 and most of the time in the time period from the moment t11 to the moment t12 may be saved.

That is, in S701 and S702, it should be noted that S701 and S702 may form an embodiment. In this embodiment, the terminal device may indicate the future first beam to the first network device at the current moment by using the first indication information. In this way, a latency caused by rescanning the SSB by the terminal device in a case of a link failure is avoided, to help reduce the latency.

S703: The terminal device sends third indication information, and the first network device receives the third indication information, where the third indication information indicates the second beam, and the second beam is obtained by the terminal device by measuring the at least one first reference signal.

Optionally, the third indication information may be a second index, and the second index indicates the second beam.

Optionally, the second beam may be a fine beam or a narrow beam.

Optionally, the second beam may be a CSI-RS beam.

Optionally, for the case 1 in S702, the terminal device may send the third indication information after the third moment and before the first moment, and the first network device receives the third indication information after the third moment and before the first moment.

Optionally, for the case 2 in S702, the terminal device may send the third indication information after the third moment and before a second moment, and the first network device receives the third indication information after the third moment and before the second moment.

Optionally, S703 includes: The terminal device sends the third indication information to the first network device through a PUSCH, and the first network device receives the third indication information through the PUSCH.

Optionally, the first network device configures a periodic resource used to report and track a CSI-RS beam for the terminal device. S703 includes: The terminal device may send the third indication information to the first network device on the resource for reporting and tracking a CSI-RS, and the first network device receives the third indication information on the configured periodic resource used to report and track a CSI-RS beam.

Optionally, S703 includes: The terminal device sends the first indication information to the first network device through a PUCCH, and the first network device receives the third indication information through the PUCCH. Specifically, the first network device may send DCI to the terminal device, where the DCI may indicate a resource for sending the third indication information. The terminal device sends the third indication information to the first network device on the resource indicated by the DCI, and the first network device receives the third indication information on the resource indicated by the DCI.

S704: The first network device sends first configuration information at the second moment, and the terminal device receives the first configuration information at the second moment, where the first configuration information indicates that a transmission beam of a control channel or a data channel is the second beam.

The second moment is obtained based on the first moment.

Optionally, a difference between the second moment and the first moment is less than a preset value. The preset value may be specified in a protocol or configured by the first network device. For example, the first moment may be a moment that is shown in FIG. 2 and at which a blockage occurs. If a time between the second moment and the first moment is excessively long, the first network device sends the first configuration information after a long time period existing after the blockage occurs. Consequently, data cannot be transmitted in a long time period between the second moment and the first moment.

Optionally, that the first configuration information indicates that a transmission beam of a control channel or a data channel is the second beam may be replaced with that the first configuration information indicates the transmission beam of the control channel or the data channel, or may be replaced with that the first configuration information indicates that a transmission beam of the first network device is the second beam.

The following describes two manners of obtaining the second moment based on the first moment.

Manner 1: The first network device may determine the second moment based on the first moment and a service congestion status of the first network device. For example, if there is service congestion for the first network device at the first moment, and there is no service congestion for the first network device at the second moment later than the first moment, the first network device may determine to send the first configuration information to the terminal device at the second moment. Before the first network device sends the first configuration information to the terminal device, the first network device may indicate the second moment to the terminal device. In this way, the first network device may send the first configuration information at the second moment, and the terminal device may receive the first configuration information at the second moment.

Optionally, in the manner 1, after the first moment and before the second moment, the transmission beam of the control channel or the data channel is the first beam. That is, the first network device sends the first configuration information at the second moment. The first moment may be a moment at which a blockage occurs or a moment at which a blockage disappears. Because the second moment is later than the first moment, transmission between the terminal device and the first network device may be interrupted in a time period between the first moment and the second moment. Therefore, after the first moment and before the second moment, the transmission beam of the control channel or the data channel is the first beam, that is, the first beam may be used as a temporary transmission beam, to avoid transmission interruption. When receiving the first configuration information at the second moment, the terminal device may determine that the second beam is the transmission beam of the data channel or the control channel.

Optionally, with reference to the case 1 in S702, as shown in FIG. 8, the terminal device may measure the at least one first reference signal at the third moment, and send the third indication information after the third moment and before the first moment. Because the second moment determined by the first network device is later than the first moment, after the first moment and before the second moment, the transmission beam of the control channel or the data channel may be temporarily the first beam. For example, the first moment may be a moment at which a blockage occurs in the scenario shown in FIG. 2, and the first beam may be an SSB beam. In this way, for the terminal device and the first network device, after the first moment at which the blockage occurs but before the moment at which the first configuration information of the second beam is received, the SSB beam may be used as the transmission beam of the data channel or the control channel, to avoid transmission interruption after the first moment and before the second moment. After the first configuration information is received at the second moment, the second beam may be a CSI-RS beam corresponding to the SSB beam. In this way, after the second moment, the CSI-RS beam may be used as the transmission beam of the data channel or the control channel. For another example, the first moment may be a moment at which the terminal device leaves a blocking environment in the scenario shown in FIG. 3, and the first beam may be an SSB beam. In this way, for the terminal device and the first network device, after the first moment at which the terminal device leaves the blocking environment but before the moment at which the first configuration information of the second beam is received, the SSB beam may be used as the transmission beam of the data channel or the control channel, to avoid transmission interruption after the first moment and before the second moment. After the first configuration information is received at the second moment, the second beam may be a CSI-RS beam corresponding to the SSB beam. In this way, after the second moment, the CSI-RS beam may be used as the transmission beam of the data channel or the control channel. The scenario shown in FIG. 4 is similar to the scenarios in FIG. 2 and FIG. 3. To avoid repetition, details are not described. In the scenario in FIG. 8, S701 may be performed before the third moment.

Optionally, with reference to the case 2 in S702, as shown in FIG. 9, the terminal device may measure the at least one first reference signal at the third moment after the first moment, and send the third indication information after the third moment and before the second moment. Because the second moment determined by the first network device is later than the first moment, after the first moment and before the second moment, the transmission beam of the control channel or the data channel may be temporarily the first beam. For example, the first moment may be a moment at which a blockage occurs in the scenario shown in FIG. 2, and the first beam may be an SSB beam. In this way, for the terminal device and the first network device, after the first moment at which the blockage occurs but before the moment at which the first configuration information of the second beam is received, the SSB beam may be used as the transmission beam of the data channel or the control channel, to avoid transmission interruption after the first moment and before the second moment. After the first configuration information is received at the second moment, the second beam may be a CSI-RS beam corresponding to the SSB beam. In this way, after the second moment, the CSI-RS beam may be used as the transmission beam of the data channel or the control channel. For another example, the first moment may be a moment at which the terminal device leaves a blocking environment in the scenario shown in FIG. 3, and the first beam may be an SSB beam. In this way, for the terminal device and the first network device, after the first moment at which the terminal device leaves the blocking environment but before the moment at which the first configuration information of the second beam is received, the SSB beam may be used as the transmission beam of the data channel or the control channel, to avoid transmission interruption after the first moment and before the second moment. After the first configuration information is received at the second moment, the second beam may be a CSI-RS beam corresponding to the SSB beam. In this way, after the second moment, the CSI-RS beam may be used as the transmission beam of the data channel or the control channel. The scenario shown in FIG. 4 is similar to the scenarios in FIG. 2 and FIG. 3. To avoid repetition, details are not described.

Manner 2: The second moment is equal to the first moment. That is, if the terminal device indicates the first moment by using the first indication information, the first network device may send the first configuration information at the first moment, and the terminal device may receive the first configuration information at the first moment.

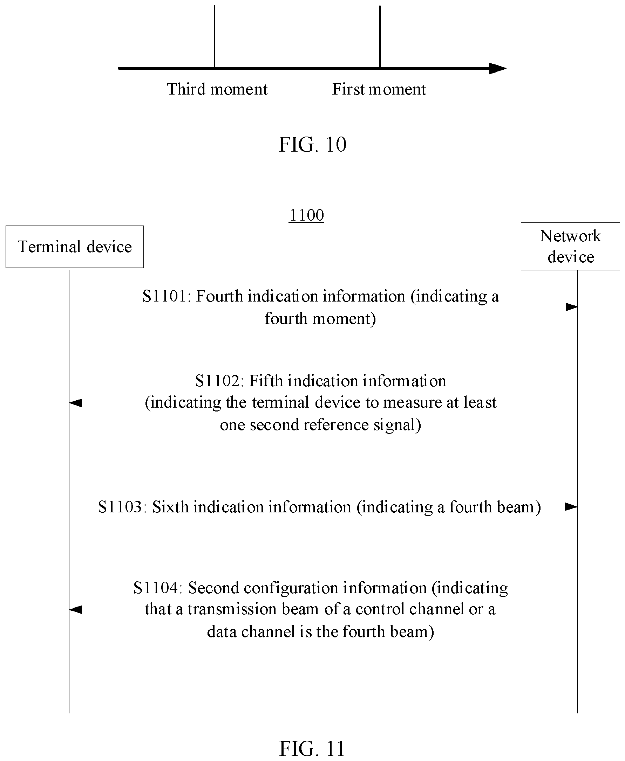

Optionally, with reference to the case 1 in S702, as shown in FIG. 10, the terminal device may measure the at least one first reference signal at the third moment before the first moment, and report the third indication information before the first moment, and the first network device may send the first configuration information at the first moment. In this way, transmission interruption can be avoided. For example, the first moment may be a moment at which a blockage occurs in the scenario shown in FIG. 2, the first beam may be an SSB beam, and the second beam is a CSI-RS beam corresponding to the SSB beam. In this way, for the terminal device and the first network device, before the first moment at which the blockage occurs, the at least one first reference signal is measured, and the third indication information is sent. When a blocking event occurs at the first moment, the CSI-RS beam corresponding to the SSB beam may be used as the transmission beam of the data channel and the control channel, to avoid transmission interruption. For another example, the first moment may be a moment at which a blockage disappears in the scenario shown in FIG. 3, the first beam may be an SSB beam, and the second beam is a CSI-RS beam corresponding to the SSB beam. In this way, for the terminal device and the first network device, before the first moment at which the blockage disappears, the at least one first reference signal is measured, and the third indication information is sent. After the blockage disappears at the first moment, the CSI-RS beam corresponding to the SSB beam may be used as the transmission beam of the data channel and the control channel, to avoid transmission interruption.

Optionally, the second moment may be replaced with a second time period. In this way, the first network device may send the first configuration information in the second time period, and the terminal device may receive the first configuration information in the second time period. Optionally, the first network device may indicate a start moment of the second time period to the terminal device. A length of the second time period may be a preset length. That is, if the first network device indicates the second moment to the terminal device, it may be understood as that the second time period is indicated. In this way, the terminal device may receive the first configuration information in the second time period.

Optionally, after S704, the method further includes: The terminal device sends fourth indication information, where the fourth indication information indicates a fourth moment, after the fourth moment, the transmission beam of the control channel or the data channel is a third beam, and the third beam is a transmission beam that is of the control channel or the data channel and that is used before the first network device receives the first indication information. Optionally, the third beam may be a CSI-RS beam. Optionally, the fourth moment is a moment of leaving the blocking environment. The terminal device may determine, based on a second position at which another terminal device leaves the blocking environment, that the terminal device may leave the blocking environment at the second position. The terminal device may predict, based on the current moment, the second position, and the movement speed of the terminal device, the fourth moment at which the terminal device moves to the second position. Optionally, in the scenario of entering a blocking environment and then leaving the blocking environment shown in FIG. 4, the fourth moment may be a moment of leaving the blocking environment, and a difference between the fourth moment and the first moment may be duration of a blockage. For example, the first moment may be t9 shown in FIG. 4, the fourth moment may be the moment t11 shown in FIG. 4, and a value of t11-t9 is the duration of the blockage. That is, after the terminal device leaves the blocking environment, a beam paired between the first network device and the terminal device may be the third beam used before the terminal device enters the blocking environment, and the third beam may be a CSI-RS beam. That is, the CSI-RS beam paired between the first network device and the terminal device after the terminal device leaves the blocking environment may be the CSI-RS beam used before the terminal device enters the blocking environment.

Optionally, the control channel may be a downlink control channel. That is, the first network device may send signaling to the downlink control channel by using the second beam. Optionally, the control channel may be a downlink data channel. That is, the first network device may send data to the downlink data channel by using the second beam.

Optionally, the second beam may alternatively be a reception beam of the data channel or the control channel. Optionally, the data channel may be an uplink data channel. That is, the first network device may receive data on the uplink data channel by using the second beam. Optionally, the control channel may be an uplink control channel. That is, the first network device may receive signaling on the uplink control channel by using the second beam.

Optionally, after S704, the first network device may send signaling to the control channel or send data to the data channel by using the second beam.

Optionally, as described in S704, the first network device sends the first configuration information at the second moment, and the terminal device receives the first configuration information at the second moment. In some possible embodiments, at the second moment, the first network device sends data or signaling by using the second beam, and at the second moment, the terminal device receives the data or the signaling sent by the first network device by using the second beam. Before the first network device sends the data or the signaling by using the second beam, the first network device may send the first configuration information, and the terminal device may receive the first configuration information. In this way, at the second moment, the first network device may send the data or the signaling by using the second beam based on the first configuration information, and at the second moment, the terminal device receives, based on the first configuration information, the data or the signaling sent by the first network device by using the second beam. That is, the embodiment of receiving the first configuration information at the second moment in the foregoing embodiment may also be applicable to receiving, at the second moment, the data or the signaling sent by the first network device by using the second beam. To avoid repetition, details are not described.

In some embodiments, after the method 700 is performed, a method 1100 shown in FIG. 11 may be further performed. The method 1100 includes the following steps.

S1101: The terminal device sends fourth indication information, and the first network device receives the fourth indication information, where the fourth indication information indicates a fourth moment.

The fourth moment may be understood as a moment at which second configuration information of a switched fourth beam is received.

Optionally, the fourth moment is a moment of leaving the blocking environment. The terminal device may determine, based on a second position at which another terminal device leaves the blocking environment, that the terminal device may leave the blocking environment at the second position. The terminal device may predict, based on the current moment, the second position, and the movement speed of the terminal device, the fourth moment at which the terminal device moves to the second position.

Optionally, in the scenario of entering a blocking environment and then leaving the blocking environment shown in FIG. 4, the fourth moment may be a moment of leaving the blocking environment, and a difference between the fourth moment and the first moment may be duration of a blockage. For example, the first moment may be t9 shown in FIG. 4, the fourth moment may be the moment t11 shown in FIG. 4, and a value of t11-t9 is the duration of the blockage.

Optionally, when the method 700 is combined with the method 1100, the terminal device may simultaneously send the first indication information and the fourth indication information, or may separately send the first indication information and the fourth indication information.

Optionally, S1101 includes: The terminal device sends the fourth indication information to the first network device through a PUSCH, and the first network device receives the fourth indication information through the PUSCH.

Optionally, the first network device configures a periodic resource used to report and track a CSI-RS beam for the terminal device. S1101 includes: The terminal device may send the fourth indication information to the first network device on the resource for reporting and tracking a CSI-RS, and the first network device receives the fourth indication information on the configured periodic resource used to report and track a CSI-RS beam.

Optionally, S1101 includes: The terminal device sends the fourth indication information to the first network device through a PUCCH, and the first network device receives the fourth indication information through the PUCCH. Specifically, the first network device may send DCI to the terminal device, where the DCI may indicate a resource for sending the fourth indication information. The terminal device sends the fourth indication information to the first network device on the resource indicated by the DCI, and the first network device receives the fourth indication information on the resource indicated by the DCI.

S 1102: The first network device sends fifth indication information, and the terminal device receives the fifth indication information, where the fifth indication information indicates the terminal device to measure at least one second reference signal.

Optionally, the fifth indication information may be configuration information of the at least one second reference signal. In this way, the terminal device may measure the at least one second reference signal based on the configuration information of the at least one second reference signal, and determine the fourth beam. Optionally, the configuration information of the at least one second reference signal may indicate a time domain position and/or a frequency domain position at which the first network device sends the at least one second reference signal.

Optionally, the at least one first reference signal may be at least one CSI-RS.

Optionally, there is a QCL relationship between the at least one second reference signal and a third beam.

Optionally, a direction of the third beam includes a direction of a beam for sending the at least one second reference signal.

Optionally, the third beam is an SSB beam. The third beam is an SSB beam that is of the control channel or the data channel and that is used before the first network device receives the first indication information.

Optionally, if the third beam is an SSB beam, the first network device may respectively send the at least one CSI-RS by using at least one sub-beam corresponding to the third beam, and the terminal device may measure the at least one CSI-RS, and determine a sub-beam corresponding to a CSI-RS with high or highest RSRP as the fourth beam.

Optionally, there is an indirect QCL relationship between the at least one second reference signal and a third beam.

Optionally, the third beam is a CSI-RS beam, and that there is an indirect QCL relationship between the at least one second reference signal and a CSI-RS beam may be understood as follows: There is a QCL relationship between the at least one second reference signal and an SSB beam corresponding to the CSI-RS beam. The third beam is a CSI-RS beam that is of the control channel or the data channel and that is used before the first network device receives the first indication information.

Optionally, if the third beam is a CSI-RS beam, the first network device may respectively send the at least one CSI-RS by using at least one sub-beam corresponding to an SSB beam corresponding to the third beam, and the terminal device may measure the at least one CSI-RS, and determine a sub-beam corresponding to a CSI-RS with high or highest RSRP as the fourth beam.

S1103: The terminal device sends sixth indication information, and the first network device receives the sixth indication information, where the sixth indication information indicates the fourth beam, and the fourth beam is obtained by the terminal device by measuring the at least one second reference signal.

Optionally, the sixth indication information may be a third index, and the third index indicates the fourth beam.

Optionally, the fourth beam may be a fine beam or a narrow beam.

Optionally, the fourth beam may be a CSI-RS beam.

S 1104: The first network device sends the second configuration information at the fourth moment, and the terminal device receives the second configuration information, where the second configuration information indicates that the transmission beam of the control channel or the data channel is the fourth beam.

Optionally, that the second configuration information indicates that the transmission beam of the control channel or the data channel is the fourth beam may be replaced with that the second configuration information indicates the transmission beam of the control channel or the data channel, or may be replaced with that the second configuration information indicates that the transmission beam of the first network device is the fourth beam.

Optionally, the control channel may be a downlink control channel. That is, the first network device may send signaling to the downlink control channel by using the fourth beam. Optionally, the control channel may be a downlink data channel. That is, the first network device may send data to the downlink data channel by using the fourth beam.

Optionally, the fourth beam may alternatively be a reception beam of the data channel or the control channel. Optionally, the data channel may be an uplink data channel. That is, the first network device may receive data on the uplink data channel by using the fourth beam. Optionally, the control channel may be an uplink control channel. That is, the first network device may receive signaling on the uplink control channel by using the fourth beam.

Optionally, after S 1104, the first network device may send signaling to the control channel or send data to the data channel by using the fourth beam.

Optionally, as described in S 1104, the first network device sends the second configuration information at the fourth moment, and the terminal device receives the second configuration information at the fourth moment. In some possible embodiments, at the fourth moment, the first network device sends data or signaling by using the fourth beam, and at the fourth moment, the terminal device receives the data or the signaling sent by the first network device by using the fourth beam. Before the first network device sends the data or the signaling by using the fourth beam, the first network device may send the second configuration information, and the terminal device may receive the second configuration information. In this way, at the fourth moment, the first network device may send the data or the signaling by using the fourth beam based on the second configuration information, and at the fourth moment, the terminal device receives, based on the second configuration information, the data or the signaling sent by the first network device by using the fourth beam. That is, the embodiment of receiving the second configuration information at the fourth moment in the foregoing embodiment may also be applicable to receiving, at the fourth moment, the data or the signaling sent by the first network device by using the fourth beam. To avoid repetition, details are not described.

In the method 1100, the terminal device may determine the fourth beam in advance before the fourth moment. In this way, a latency can be reduced, and as shown in FIG. 4, before the terminal device leaves the blocking environment, the fourth beam to be used after the terminal device leaves the blocking environment may be measured, to avoid a problem that a long latency is caused because the first network device and the terminal device need to perform beam pairing for a long time after the terminal device leaves the blocking environment, so as to improve transmission performance.

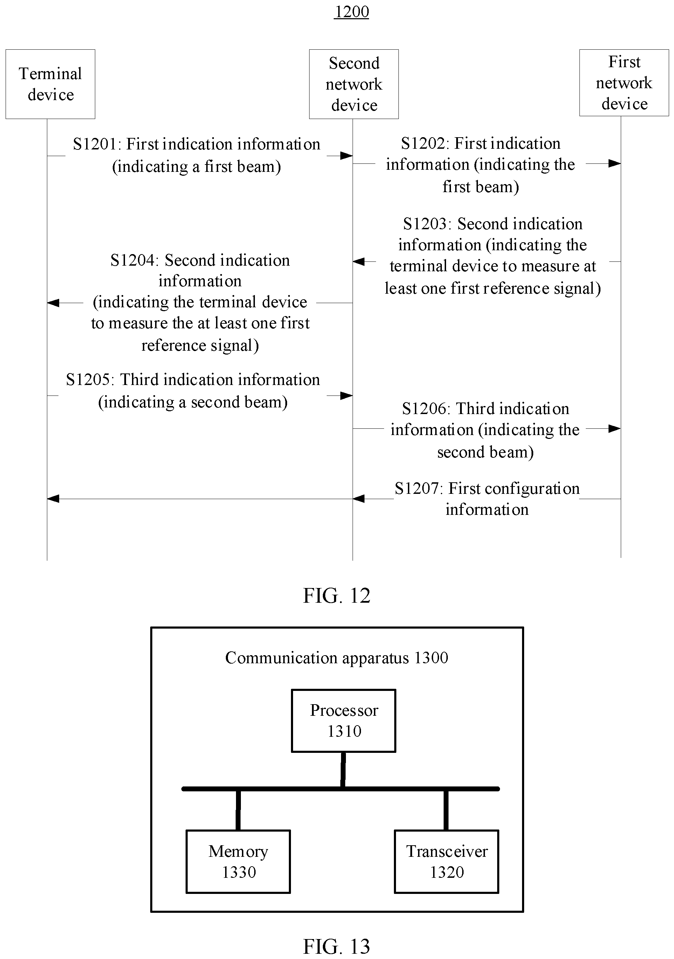

As described in the foregoing method embodiment, as the terminal device moves, the beam paired between the first network device and the terminal device changes due to a scenario such as a blocking scenario and/or a scenario of leaving the blocking environment. In some embodiments, as the terminal device moves, a network device serving the terminal device may change. For example, in the scenario shown in FIG. 5, a long latency is caused in a process in which the terminal device is handed over from the second network device to the first network device. The following describes, with reference to a method 1200 shown in FIG. 12, an information transmission method in the scenario shown in FIG. 5. The method 1200 includes the following steps.

S1201: A terminal device sends first indication information to a second network device, and the second network device receives the first indication information from the terminal device, where the first indication information indicates a first beam.

Optionally, the first indication information indicates the first beam and a first moment. Optionally, the first moment is a future moment, and a first network device may determine, based on the first moment indicated by the first indication information, that the first beam is a beam at the future first moment.

Optionally, in a scenario of switching a network device, the first moment may be a moment at which the terminal device leaves a coverage area of the second network device and enters a coverage area of the first network device. For example, in the scenario shown in FIG. 5, the first moment is t14. Optionally, the terminal device may predict a first position at which the terminal device leaves the coverage area of the second network device and enters the coverage area of the first network device, and the terminal device may predict, based on a current position of the terminal device, a movement speed of the terminal device, and a current moment, that a future moment at which the terminal device arrives at the first position is the first moment.

Optionally, the first indication information indicates the first beam and indicates that the first beam is a future beam. Optionally, the first indication information indicates the first beam and indicates that the first beam is an SSB beam to be paired between the first network device and the terminal device.

Optionally, the first moment may be replaced with a first time period. The first indication information may indicate the first time period. Optionally, the first indication information may indicate the first time period by indicating a start moment of the first time period. A length of the first time period may be a preset length. That is, if the first indication information indicates the first moment, it may be understood as that the first indication information indicates the first time period.

Optionally, when the terminal device performs S1201, the terminal device is at the current position, and the first indication information may indicate the first beam and the first position. Optionally, the first position is a future position of the terminal device, and the first network device may obtain a real-time position of the terminal device. The first position is different from the current position. Therefore, the first network device may determine, based on the first position indicated by the first indication information, that the first beam is a future beam.

Optionally, the terminal device may determine the first moment based on the current position of the terminal device, the current moment, the movement speed of the terminal device, and the first position. The terminal device may determine, based on a distance between the first position and the current position of the terminal device, the current moment, and the movement speed of the terminal device, the first moment at which the terminal device moves to the first position.

Optionally, the first beam is a wide beam, a coarse beam, or an SSB beam.

Optionally, if the first indication information indicates the first beam, the first indication information may be a first index, and the first index may uniquely indicate the first beam.

A manner of determining the first beam by the terminal device is the same as the manner of determining the first beam in S701. To avoid repetition, details are not described in this embodiment of this application.

Optionally, the second network device may be a network device serving the terminal device.

Optionally, the terminal device may further determine, based on a network device accessed when another terminal device moves to the first position, a network device accessed by the terminal device. For example, if the network device accessed by the another terminal device when the another terminal device moves to the first position is the first network device, the terminal device determines that the network device accessed when the terminal device moves to the first position is also the first network device. After determining the first network device, the terminal device may indicate an identifier of the first network device to the second network device, so that the second network device may perform S1202.

Optionally, S1201 includes: The terminal device sends the first indication information to the first network device through a PUSCH, and the first network device receives the first indication information through the PUSCH.

Optionally, the first network device configures a periodic resource used to report and track a CSI-RS beam for the terminal device. S1201 includes: The terminal device may send the first indication information to the first network device on the resource for reporting and tracking a CSI-RS, and the first network device receives the first indication information on the configured periodic resource used to report and track a CSI-RS beam.

Optionally, S1201 includes: The terminal device sends the first indication information to the first network device through a PUCCH, and the first network device receives the first indication information through the PUCCH. Specifically, the first network device may send DCI to the terminal device, where the DCI may indicate a resource for sending the first indication information. The terminal device sends the first indication information to the first network device on the resource indicated by the DCI, and the first network device receives the first indication information on the resource indicated by the DCI.

S1202: The second network device sends the first indication information to the first network device.

Optionally, the second network device may send the first indication information to the first network device based on the identifier of the first network device.

S1203: The first network device sends second indication information to the second network device, and the second network device receives the second indication information from the first network device, where the second indication information indicates the terminal device to measure at least one first reference signal.

For the second indication information and the at least one first reference signal in S1203, refer to the descriptions of S702.

S1204: The second network device sends the second indication information to the terminal device.

S1205: The terminal device sends third indication information to the second network device, and the second network device receives the third indication information, where the third indication information indicates a second beam, and the second beam is obtained by the terminal device by measuring the at least one first reference signal.

For descriptions of the third indication information, refer to the descriptions of S703. To avoid repetition, details are not described.

S1206: The second network device sends the third indication information to the first network device, and the first network device receives the third indication information.

S1207: The first network device sends first configuration information to the terminal device through the second network device at a second moment, and the terminal device receives the first configuration information through the second network device at the second moment, where the first configuration information indicates that a transmission beam of a control channel or a data channel is the second beam.

For descriptions of S 1207, refer to the descriptions of S704.

Optionally, the second network device may determine the second moment based on the first moment, and send, at the second moment, an instruction to the first network device to indicate the first network device to send the first configuration information.

For descriptions of the second moment and the first moment, refer to the descriptions of the method 700. The first network device may obtain the second moment based on the first moment.

In the method 1200, before the terminal device moves from the coverage area of the second network device to the coverage area of the first network device, the terminal device may send the first indication information to the second network device in advance to indicate the first beam and the first moment, to avoid a long latency caused by scanning the SSB beam when the terminal device moves to an overlapping area between the coverage area of the second network device and the coverage area of the first network device. For example, in the scenario shown in FIG. 5, the first moment may be t4, and the terminal device may determine the SSB beam before the moment t14, and determine the CSI-RS beam corresponding to the SSB beam after the moment t14. That is, the terminal device needs to determine, before moving to the coverage area of the first network device, the SSB beam to be paired between the first network device and the terminal device after the terminal device moves to the coverage area of the first network device and the CSI-RS beam corresponding to the SSB beam. This helps reduce a latency, for example, may reduce a latency in a time period from the moment 114 to a moment t15. Alternatively, the terminal device needs to determine, before moving to the coverage area of the first network device, the SSB beam to be paired between the first network device and the terminal device after the terminal device moves to the coverage area of the first network device, and the terminal device needs to determine the CSI-RS beam corresponding to the SSB beam after moving to the coverage area of the first network device. This helps reduce a latency in determining the SSB beam. It takes a long time for the terminal device to scan the SSB beam. Therefore, the terminal device determines the SSB beam in most of time in the time period from the moment t14 to the moment t15. After the terminal device enters the coverage area of the first network device, most of the time in the time period from the moment t14 to the moment t15 shown in FIG. 5 may be saved.

It should be noted that in embodiments of this application, all of the first beam, the second beam, the third beam, the fourth beam, the fifth beam, the sixth beam, the seventh beam, the SSB beam, and the CSI-RS beam are transmission beams or reception beams of the first network device.

It should be noted that the application scenarios shown in FIG. 2 to FIG. 5 in embodiments of this application are merely examples for description. Embodiments of this application may be further applied to another scenario. To avoid repetition, details are not described.

It should also be noted that in embodiments of this application, only an example in which the at least one first reference signal or the at least one second reference signal is a CSI-RS is used for description. The at least one first reference signal or the at least one second reference signal may alternatively be another reference signal, for example, may be a DMRS, a cell-specific reference signal (cell-specific reference signal, CRS), or a positioning reference signal (positioning reference signal, PRS).

It may be understood that an execution sequence of the foregoing method embodiments is not limited by a number, and the execution sequence may be determined based on internal logic. The execution sequence of the methods may be changed provided that no conflict exists.

It may be understood that the foregoing method embodiments may be independent embodiments or embodiments that may be combined with each other. Steps in different method embodiments may be combined into another embodiment, and steps in a same method embodiment may also be combined into another embodiment.

It may be understood that the methods and the operations implemented by the terminal device in the foregoing method embodiments may alternatively be implemented by a component (for example, a chip or a circuit) that may be used in the terminal device, the methods and the operations implemented by the first network device in the foregoing method embodiments may alternatively be implemented by a component (for example, a chip or a circuit) that may be used in the first network device, and the methods and the operations implemented by the second network device in the foregoing method embodiments may alternatively be implemented by a component (for example, a chip or a circuit) that may be used in the second network device.

The foregoing describes the method embodiments provided in this application. The following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein.

FIG. 13 shows a communication apparatus 1300 according to an embodiment of this application. The communication apparatus 1300 includes a processor 1310 and a transceiver 1320. The processor 1310 and the transceiver 1320 communicate with each other through an internal connection path, and the processor 1310 is configured to execute instructions, to control the transceiver 1320 to send a signal and/or receive a signal.

Optionally, the communication apparatus 1300 may further include a memory 1330. The memory 1330 communicates with the processor 1310 and the transceiver 1320 through the internal connection path. The memory 1330 is configured to store instructions, and the processor 1310 may execute the instructions stored in the memory 1330. In a possible implementation, the communication apparatus 1300 is configured to implement the procedures and steps corresponding to the terminal device in the foregoing method embodiments. In another possible implementation, the communication apparatus 1300 is configured to implement the procedures and steps corresponding to the first network device in the foregoing method embodiments. In another possible implementation, the communication apparatus 1300 is configured to implement the procedures and steps corresponding to the second network device in the foregoing method embodiments.

It should be understood that the communication apparatus 1300 may be specifically the terminal device, the first network device, or the second network device in the foregoing embodiments, or may be a chip or a chip system. Correspondingly, the transceiver 1320 may be a transceiver circuit of the chip. This is not limited herein. Specifically, the communication apparatus 1300 may be configured to perform the steps and/or the procedures corresponding to the terminal device, the first network device, or the second network device in the foregoing method embodiments. Optionally, the memory 1330 may include a read-only memory and a random access memory, and provide instructions and data for the processor. A part of the memory may further include a nonvolatile random access memory. For example, the memory may further store information about a device type. The processor 1310 may be configured to execute the instructions stored in the memory, and when the processor 1310 executes the instructions stored in the memory, the processor 1310 is configured to perform the steps and/or the procedures in the method embodiments corresponding to the terminal device, the first network device, or the second network device.

In an implementation process, the steps of the foregoing methods may be completed by using an integrated logic circuit of hardware in the processor, or by using instructions in a form of software. The steps of the methods disclosed with reference to embodiments of this application may be directly performed and completed by a hardware processor, or may be performed and completed by using a combination of hardware in a processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory, and completes the steps of the foregoing methods in combination with the hardware in the processor. To avoid repetition, details are not described herein.

It should be noted that the processor in embodiments of this application may be an integrated circuit chip and has a signal processing capability. In an implementation process, the steps in the foregoing method embodiments may be completed by using an integrated logic circuit of hardware in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory, and completes the steps of the foregoing methods in combination with the hardware in the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification includes but is not limited to these memories and any memory of another proper type.

According to the method provided in embodiments of this application, this application further provides a computer program product. The computer program product includes computer program code. When the computer program code is run on a computer, the computer is enabled to perform the steps or procedures performed by the terminal device, the first network device, or the second network device in the foregoing method embodiments.

According to the method provided in embodiments of this application, this application further provides a computer-readable storage medium. The computer-readable storage medium stores program code. When the program code is run on a computer, the computer is enabled to perform the steps or procedures performed by the terminal device, the first network device, or the second network device in the foregoing method embodiments.

According to the method provided in embodiments of this application, this application further provides a communication system. The communication system includes one or more terminal devices, one or more first network devices, and one or more second network devices described above.

The foregoing apparatus embodiments exactly correspond to the method embodiments. A corresponding module or unit performs a corresponding step. For example, a communication unit (a transceiver) performs a receiving step or a sending step in the method embodiments, and a processing unit (a processor) may perform a step other than the sending step or the receiving step. A function of a specific unit may be based on a corresponding method embodiment. There may be one or more processors.

In this application, an "indication" may include a direct indication and an indirect indication, or may include an explicit indication and an implicit indication. Information indicated by specific information is referred to as to-be-indicated information. In a specific implementation process, the to-be-indicated information may be indicated in many manners. For example, without limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and other parts of the to-be-indicated information are known or pre-agreed on. For example, specific information may be indicated by using an arrangement sequence of various pieces of information that is pre-agreed on (for example, stipulated in a protocol), to reduce indication overheads to some extent.

In embodiments of this application, all of the terms and English abbreviations are examples given for ease of description, and should not constitute any limitation on this application. This application does not exclude a possibility of defining another term that can implement a same or similar function in an existing or future protocol.

A person of ordinary skill in the art may be aware that the illustrative logical blocks (illustrative logical block) and steps (step) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for convenient and brief description, detailed working processes of the system, apparatus, and unit described above may be based on the corresponding processes in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each unit may exist alone physically, or two or more units may be integrated into one unit.

In the foregoing embodiments, all or some of the functions of the functional units may be implemented by using software, hardware, firmware, or any combination thereof. When software is used for implementation, all or some of the functions may be implemented in a form of a computer program product. The computer program product includes one or more computer instructions (programs). When the computer program instructions (programs) are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, into which one or more usable media are integrated. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method is applicable to a terminal device, and comprises:
sending first indication information, wherein the first indication information indicates a first beam and a first moment;
receiving second indication information, wherein the second indication information indicates the terminal device to measure at least one first reference signal, and there is a quasi co-location QCL relationship between the at least one first reference signal and the first beam;
sending third indication information, wherein the third indication information indicates a second beam, and the second beam is obtained by the terminal device by measuring the at least one first reference signal; and
receiving first configuration information at a second moment, wherein the first configuration information indicates that a transmission beam of a control channel or a data channel is the second beam, the second moment is not earlier than the first moment, and the second moment is obtained based on the first moment.

2. The method according to claim 1, wherein the second indication information indicates the terminal device to measure the at least one first reference signal at a third moment; and
the third moment is not later than the first moment.

3. The method according to claim 1, wherein the second indication information indicates the terminal device to measure the at least one first reference signal at a third moment; and
the third moment is not earlier than the first moment.

4. The method according to any one of claims 1 to 3, wherein after the first moment and before the second moment, the transmission beam of the control channel or the data channel is the first beam.

5. The method according to any one of claims 1 to 4, wherein a difference between the second moment and the first moment is less than a preset value.

6. The method according to any one of claims 1 to 5, wherein the method further comprises:
sending fourth indication information, wherein the fourth indication information indicates a fourth moment;
receiving fifth indication information, wherein the fifth indication information indicates the terminal device to measure at least one second reference signal, there is a QCL relationship or an indirect QCL relationship between the at least one second reference signal and a third beam, and the third beam is a transmission beam that is of the control channel or the data channel and that is used before the first indication information is sent;
sending sixth indication information, wherein the sixth indication information indicates a fourth beam, and the fourth beam is obtained by the terminal device by measuring the at least one second reference signal; and
receiving second configuration information at the fourth moment, wherein the second configuration information indicates that the transmission beam of the control channel or the data channel is the fourth beam.

7. The method according to any one of claims 1 to 5, wherein the method further comprises:
sending fourth indication information, wherein the fourth indication information indicates a fourth moment, after the fourth moment, the transmission beam of the control channel or the data channel is a third beam, and the third beam is a transmission beam that is of the control channel or the data channel and that is used before the first indication information is sent.

8. An information transmission method, wherein the method is applicable to a first network device, and comprises:
receiving first indication information, wherein the first indication information indicates a first beam and a first moment;
sending second indication information, wherein the second indication information indicates a terminal device to measure at least one first reference signal, and there is a quasi co-location QCL relationship between the at least one first reference signal and the first beam;
receiving third indication information, wherein the third indication information indicates a second beam, and the second beam is obtained by the terminal device by measuring the at least one first reference signal; and
sending first configuration information at a second moment, wherein the first configuration information indicates that a transmission beam of a control channel or a data channel is the second beam, the second moment is not earlier than the first moment, and the second moment is obtained based on the first moment.

9. The method according to claim 8, wherein the second indication information indicates the terminal device to measure the at least one first reference signal at a third moment; and
the third moment is earlier than the first moment.

10. The method according to claim 8, wherein the second indication information indicates the terminal device to measure the at least one first reference signal at a third moment; and
the third moment is later than the first moment.

11. The method according to any one of claims 8 to 10, wherein after the first moment and before the second moment, the transmission beam of the control channel or the data channel is the first beam.

12. The method according to any one of claims 8 to 11, wherein a difference between the second moment and the first moment is less than a preset value.

13. The method according to any one of claims 8 to 12, wherein the method further comprises:
receiving fourth indication information, wherein the fourth indication information indicates a fourth moment;
sending fifth indication information, wherein the fifth indication information indicates the terminal device to measure at least one second reference signal, there is a quasi co-location QCL relationship or an indirect QCL relationship between the at least one second reference signal and a third beam, and the third beam is a transmission beam that is of the control channel or the data channel and that is used before the first indication information is received;
receiving sixth indication information, wherein the sixth indication information indicates a fourth beam, and the fourth beam is obtained by the terminal device by measuring the at least one second reference signal; and
sending second configuration information at the fourth moment, wherein the second configuration information indicates that the transmission beam of the control channel or the data channel is the fourth beam.

14. The method according to any one of claims 8 to 12, wherein the sending further comprises: sending fourth indication information, wherein the fourth indication information indicates a fourth moment, after the fourth moment, the transmission beam of the control channel or the data channel is a third beam, and the third beam is a transmission beam that is of the control channel or the data channel and that is used before the first indication information is received.

15. A communication apparatus, comprising a processor and a memory, wherein the processor is coupled to the memory, the memory is configured to store a computer program or instructions, and the processor is configured to execute the computer program or the instructions in the memory, to perform the method according to any one of claims 1 to 14.

16. A computer-readable storage medium that stores a program or instructions used to implement the method according to any one of claims 1 to 14.

17. A computer program product comprising instructions, wherein when the computer program product is run on a computer, the computer is enabled to perform the method according to any one of claims 1 to 14.

18. A chip, wherein the chip is coupled to a memory, and is configured to read and execute program instructions stored in the memory, to implement the method according to any one of claims 1 to 14.
